# EUROPEAN PATENT APPLICATION

(11) **EP 4 447 598 A1**
(43) Date of publication of application: **16.10.2024**
(21) Application number: 21966857.1
(22) Date of filing: 10.12.2021
(51) Int. Cl.: H04W 74/08

(54) **METHOD AND APPARATUS FOR DETERMINING RANDOM ACCESS OCCASION RESOURCE INFORMATION, AND METHOD AND APPARATUS FOR INDICATING RANDOM ACCESS OCCASION RESOURCE INFORMATION**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2021/137257
(87) International publication number: WO 2023/102939

(57) **Abstract**

The present invention relates to a method and apparatus for determining random access occasion resource information, and a method and apparatus for indicating random access occasion resource information. The method for determining random access occasion resource information comprises: triggering 4-step contention-free random access (CFRA); and when random access occasion RO resource information independently configured for the terminal does not exist in RO configuration information of the CFRA, determining the RO resource information of the triggered 4-step CFRA according to random access occasion RO resource information of the 4-step contention-based random access (CBRA) of the specified version. According to the present invention, the terminal can determine the RO resource information of the triggered 4-step CFRA according to RO resource information of the 4-step CBRA of the specified version. The technical problem that it is difficult for the terminal to judge which version of RO resource information of the 4-step CBRA is used to determine the RO resource information of the 4-step CFRA when the terminal faces RO resource information of the 4-step CBRA of a plurality of versions is avoided.

## Description

### TECHNICAL FIELD

The present invention or disclosure relates to the field of communication technology, in particular, to a method for determining random access occasion resource information, a method for indicating random access occasion resource information, a device for determining random access occasion resource information, a device for indicating random access occasion resource information, a communication device, and a computer-readable storage medium.

### BACKGROUND

In some scenarios, the terminal may initiate a random access procedure. The random access procedure includes two types based on the number of steps, i.e., 2-step random access and 4-step random access. The random access procedure includes two types based on the contention types, i.e., Contention-Based Random Access (CBRA) and Contention-Free Random Access (CFRA).

In the case of 4-step CFRA, after initiating the 4-step CFRA, the terminal needs to initiate the 4-step CFRA at a random access occasion, which may also be called a Physical Random Access Channel (PRACH) Occasion (RO). Therefore, the terminal first needs to determine the RO resource information for the 4-step CFRA.

However, in some cases, the network side does not indicate any RO resource in CFRA configuration information. In these cases, the terminal may use the RO resource in the 4-step CBRA configuration information.

However, with the development of random communication technology, the application scenarios are also expanded. In order to adapt to the features of different scenarios, different CBRA configuration information may be configured for different features, so the terminal may be configured with multiple pieces of CBRA configuration information. This will cause that the terminal cannot determine which RO resource in the CBRA configuration information to use for the CFRA when the terminal does not obtain any RO resource information from the CFRA configuration information.

### SUMMARY

In view of the above, embodiments of the present invention provide a method for determining random access occasion resource information, a method for indicating random access occasion resource information, a device for determining random access occasion resource information, a device for indicating random access occasion resource information, a communication device, and a computer-readable storage medium to solve the technical problems in the related art.

According to a first aspect of embodiments of the present invention, a method for determining random access occasion (RO) resource information, performed by a terminal, is provided. The method includes: initiating a 4-step Contention-Free Random Access (CFRA); and determining the RO resource information for the initiated 4-step CFRA based on RO resource information for a 4-step Contention-Based Random Access (CBRA) in a specified release when separate RO resource information configured in RO configuration information for the CFRA is absent for the terminal.

According to a second aspect of embodiments of the present invention, a method for indicating random access occasion (RO) resource information, performed by a terminal, is provided. The method includes: initiating a 4-step Contention-Free Random Access (CFRA); instructing a terminal to determine the RO resource information for the initiated 4-step CFRA based on RO resource information for a 4-step Contention-Based Random Access (CBRA) in a specified release when separate RO resource information configured in RO configuration information for the CFRA is absent for the terminal.

According to a third aspect of embodiments of the present invention, a device for determining a random access occasion (RO) resource information is provided. The device includes one or more processors. The one or more processors are configured to initiate a 4-step Contention-Free Random Access (CFRA); and determine the RO resource information for the initiated 4-step CFRA based on RO resource information for a 4-step Contention-Based Random Access (CBRA) in a specified release when separate RO resource information configured in RO configuration information for the CFRA is absent for the terminal.

According to a fourth aspect of embodiments of the present invention, a device for indicating random access occasion (RO) resource information is provided. The device includes one or more processors. The one or more processors are configured to initiate a 4-step Contention-Free Random Access (CFRA); and instruct a terminal to determine the RO resource information for the initiated 4-step CFRA based on RO resource information for a 4-step Contention-Based Random Access (CBRA) in a specified release when separate RO resource information configured in RO configuration information for the CFRA is absent for the terminal.

According to a fifth aspect of embodiments of the present invention, a communication device is provided. The communication device includes a processor and a memory for storing a computer program. When the computer program is executed by the processor, the method for determining a random access occasion (RO) resource information is performed.

According to a sixth aspect of embodiments of the present invention, a communication device is provided. The communication device includes a processor and a memory for storing a computer program. When the computer program is executed by the processor, the method for indicating random access occasion (RO) resource information is performed.

According to a seventh aspect of embodiments of the present invention, a computer-readable storage medium is provided. The computer-readable storage medium has a computer program stored thereon. When the computer program is executed by a processor, the method for determining random access occasion (RO) resource information is performed.

According to an eighth aspect of embodiments of the present invention, a computer-readable storage medium is provided. The computer-readable storage medium has a computer program stored thereon. When the computer program is executed by a processor, the method for indicating random access occasion (RO) resource information is performed.

According to embodiment of the present invention, the terminal may determine the RO resource information for the initiated 4-step CFRA based on the RO resource information for the 4-step CBRA in the specified release. Therefore, even if the terminal is configured with the RO resource information for the 4-step CBRA in the legacy release and the RO resource information for the 4-step CBRA in the Release 17 (R17), the terminal may accurately determine which release of RO resource information for the 4-step CBRA is used to determine the RO resource information for the initiated 4-step CFRA, thereby avoiding the technical problem that it is difficult to determine which release of RO resource information for the 4-step CBRA is used to determine the RO resource information for the 4-step CFRA when there is RO resource information for the 4-step CBRA in multiple releases for the terminal to select.

### BRIEF DESCRIPTION OF THE DRAWINGS

In order to more clearly illustrate the technical solutions in embodiments of the present invention, the drawings that need to be used in the description of embodiments will be briefly introduced below. Obviously, the drawings in the following description are only some embodiments of the present invention. For those skilled in the art, other drawings may also be obtained based on these drawings without any creative effort.
FIG. 1 is a schematic flowchart illustrating a method for determining a random access occasion (RO) resource information according to an embodiment of the present invention.
FIG. 2 is a schematic flowchart illustrating another method for determining RO resource information according to an embodiment of the present invention.
FIG. 3 is a schematic flowchart illustrating another method for determining RO resource information according to an embodiment of the present invention.
FIG. 4 is a schematic flowchart illustrating another method for determining RO resource information according to an embodiment of the present invention.
FIG. 5 is a schematic flowchart illustrating another method for determining RO resource information according to an embodiment of the present invention.
FIG. 6 is a schematic flowchart illustrating another method for determining RO resource information according to an embodiment of the present invention.
FIG. 7 is a schematic flowchart illustrating a method for indicating RO resource information according to an embodiment of the present invention.
FIG. 8 is a schematic flowchart illustrating another method for indicating RO resource information according to an embodiment of the present invention.
FIG. 9 is a schematic flowchart illustrating another method for indicating RO resource information according to an embodiment of the present invention.
FIG. 10 is a schematic flowchart illustrating another method for indicating RO resource information according to an embodiment of the present invention.
FIG. 11 is a schematic flowchart illustrating another method for indicating RO resource information according to an embodiment of the present invention.
FIG. 12 is a schematic flowchart illustrating another method for indicating RO resource information according to an embodiment of the present invention.
FIG. 13 is a schematic block diagram illustrating a device for indicating RO resource information according to an embodiment of the present invention.
FIG. 14 is a schematic block diagram illustrating a device for determining RO resource information according to an embodiment of the present invention.

### DETAILED DESCRIPTION

The following will clearly and completely describe the technical solutions according to embodiments of the present invention with reference to the accompanying drawings in embodiments of the present invention. Apparently, the described embodiments are only some, but not all, of embodiments of the present invention. Based on embodiments in the present invention, all other embodiments obtained by persons of ordinary skill in the art without making creative efforts belong to the protection scope of the present invention.

Terms used in embodiments of the present invention are for the purpose of describing specific embodiments only, and are not intended to limit embodiments of the present invention. As used in examples of the present invention and the appended claims, the singular forms "a" and "the" are also intended to include the plural unless the context clearly dictates otherwise. It is understandable that the term "and/or" as used herein refers to and includes any and all possible combinations of one or more of the associated listed items.

It is understandable that although embodiments of the present invention may use the terms first, second, third, etc. to describe various information, the information should not be limited to these terms. These terms are only used to distinguish information of the same type from one another. For example, without departing from the scope of embodiments of the present invention, first information may also be called second information, and similarly, second information may also be called first information. Depending on the context, the word "if" as used herein may be interpreted as "at" or "when" or "in response to determining."

For the purpose of brevity and ease of understanding, the terms used herein are "greater than" or "less than", "higher than" or "lower than" when representing a size relationship. But for those skilled in the art, it is understandable that the term "greater than" also covers the meaning of "greater than or equal to", the term "less than" also covers the meaning of "less than or equal to", the term "higher than" covers the meaning of "higher than or equal to", and the term "lower than" also covers the meaning of "lower than or equal to".

After initiating a 4-step Contention-Free Random Access (CFRA), the terminal needs to initiate the CFRA at a random access occasion (RO) (also called a Physical Random Access Channel Occasion). Therefore, the terminal first needs to determine RO resource information for the 4-step CFRA.

Generally, for the RO resource information for the 4-step CFRA, CFRA configuration contains two parts, one part is RO configuration information and the other part is a correspondence between a Synchronization Signal Block (SSB) and the RO, and the terminal may determine the RO for the 4-step CFRA based on contents of these two parts.

However, in some cases, the network side does not indicate any RO resource information in the CFRA configuration information. For example, the RO configuration information in the CFRA configuration information is absent. In this case, the terminal may use the RO resource, indicated by information element RACH-ConfigCommon, in the configuration information for the 4-step CBRA.

However, with the development of random communication technology, the application scenarios are also expanded. For example, in R17, in order to adapt to features in different scenarios, such as slice Slicing, Small Data Transmission (SDT), Coverage Enhancement (CE), Reduced Capability (Redcap) device, or the like, different CBRA configuration information may be configured for different features. That is, the terminal may be configured with RO resource information for the 4-step CBRA in the R17. The RO resource information for the 4-step CBRA in the R17 may include multiple pieces of RO resource information for the 4-step CBRA.

In addition, the terminal may also be configured with RO resource information for the 4-step CBRA in the legacy release, such as RO resource information for the 4-step CBRA in the Release 15 (R15) and the RO resource information for the 4-step CBRA in the Release 16 (R16). In the legacy release, the network side device does not configure different CBRA configuration information for the terminal based on the above features, but only configures one RO resource information for the 4-step CBRA for the terminal.

Then, for the terminal, when configured with the RO resource information for the 4-step CBRA in the legacy release and the RO resource information for the 4-step CBRA in the R17, there are RO resource information for the 4-step CBRA in multiple releases. When faced with the RO resource information for the 4-step CBRA in multiple releases, it is difficult for the terminal to determine which release of RO resource information for the 4-step CBRA is used to determine the RO resource information for the 4-step CFRA. The following embodiments of the present invention are mainly provided to solve this technical problem.

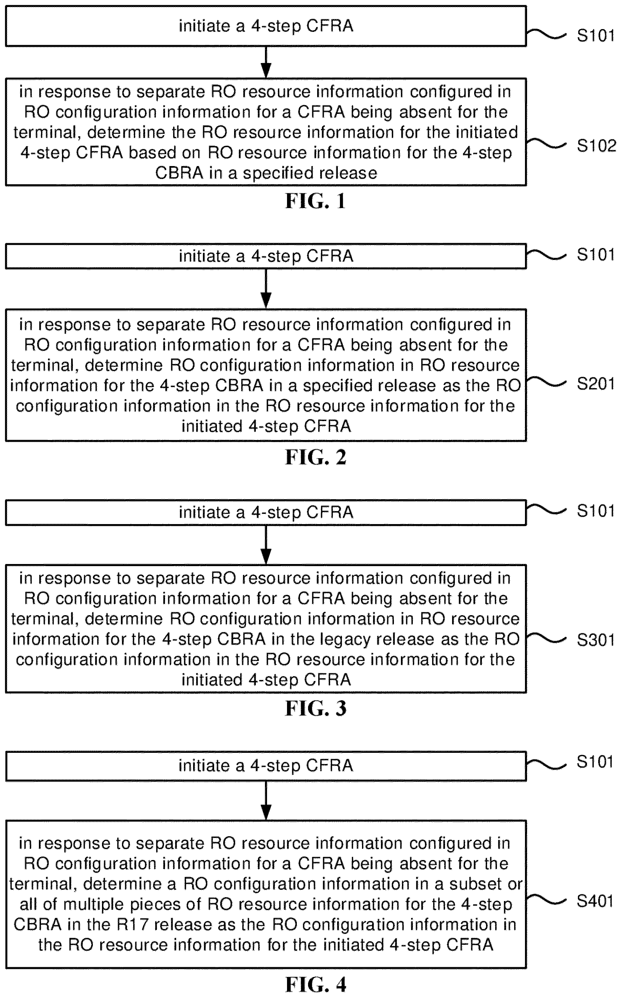

FIG. 1 is a schematic flowchart illustrating a method for determining RO resource information according to an embodiment of the present invention. The method for determining RO resource information illustrated in embodiments may be performed by a terminal. The terminal may communicate with a network side device. The terminal is selected from a group including, but not being limited to, a mobile phone, a tablet computer, a wearable device, a sensor, an Internet of Things, or other communication devices. The network side device is selected from a group including, but not being limited to, a network side device in fourth generation (4G), fifth generation (5G), sixth generation (6G) and other communication systems, such as base stations, a core network, or others.

As illustrated in FIG. 1, the method for determining RO resource information may include the following.

In step S101, a 4-step Contention-Free Random Access (CFRA) is initiated.

In step S102, when separate RO resource information configured in RO configuration information for the CFRA is absent for the terminal, the RO resource information for the initiated 4-step CFRA is determined based on RO resource information for a 4-step Contention-Based Random Access (CBRA) in a specified release.

In an embodiment, the terminal may initiate the 4-step CFRA under certain circumstances. The 4-step CFRA is initiated in at least one of the following ways.

The 4-step CFRA is initiated by a Physical Downlink Control Channel (PDCCH) order, by a System Information (SI) request; or by a Handover command.

After initiating the 4-step CFRA, the terminal needs to determine the RO resource information for the 4-step CFRA. For example, the terminal needs to determine whether there is RO resource information configured independently for the terminal in the CFRA configuration information. When there is the RO resource information independently configured for the terminal, the terminal may determine, based on the RO resource information independently configured for the terminal, the RO at which the 4-step CFRA is initiated. When there is no RO resource information independently configured for the terminal, the terminal may determine the RO resource information for the initiated 4-step CFRA.

According to embodiment of the present invention, the terminal may determine the RO resource information of the initiated 4-step CFRA based on the RO resource information for the 4-step CBRA in the specified release. Therefore, even if the terminal is configured with the RO resource information for the 4-step CBRA in the legacy release and the RO resource information for the 4-step CBRA in the R17, the terminal may accurately determine which release of RO resource information for the 4-step CBRA is used to determine the RO resource information for the initiated 4-step CFRA, thereby avoiding the technical problem that it is difficult to determine which release of RO resource information for the 4-step CBRA is used to determine the RO resource information for the 4-step CFRA when there are RO resource information for the 4-step CBRA in multiple releases for the terminal to select.

It is noteworthy that in the related art (such as the R15 and the R16), the information element corresponding to the 4-step CBRA configuration information is RACH-ConfigCommon, and thus the RACH-ConfigCommon refers to the 4-step CBRA configuration information in the legacy release by default.

According to embodiment of the present invention, in order to clearly specify which release is the "specified release", the information element RACH-ConfigCommon may be adjusted.

For example, the CBRA configuration in the R17 may be distinguished from the CBRA configuration in the legacy release by different suffixes, such as RACH-ConfigCommon-r17.

For example, the CBRA configuration in the R17 may be distinguished from the CBRA configuration in the legacy release by different names, such as RACH-ConfigCommonExt-R17.

In an embodiment, the specified release is determined based on an indication from a network side device or determined based on a protocol.

The terminal may determine the specified release based on the indication from the network side device. As an example, when the specified release indicated by the network side device is the R17, the terminal determines the RO resource information for the initiated 4 Step CFRA based on the RO resource information for the 4-step CBRA in the R17. As another example, when the specified release indicated by the network side device is the legacy release, the terminal determines the RO resource information for the initiated 4-step CFRA based on the RO resource information for the 4-step CBRA in the legacy release.

The terminal may also determine the specified release based on the protocol. As an example, when the specified release agreed in the protocol is the R17, the terminal determines the RO resource information for the initiated 4-step CFRA based on the RO resource information for the 4-step CBRA in the R17. As another example, when the specified release agreed in the protocol is the legacy release, the terminal determines the RO resource information for the initiated 4-step CFRA based on the RO resource information for the 4-step CBRA in the legacy release.

In an embodiment, the specified release includes at least one of a legacy release or a R17. In an embodiment, the legacy release includes at least one of a R15 or a R16.

FIG. 2 is a schematic flowchart illustrating another method for determining RO resource information according to an embodiment of the present invention. As illustrated in FIG. 2, determining the RO resource information for the initiated 4-step CFRA based on the RO resource information for the 4-step CBRA in the specified release includes the following.

In step S202, RO configuration information in the RO resource information for the 4-step CBRA in the specified release is determined as RO configuration information in the RO resource information for the initiated 4-step CFRA.

In an embodiment, the 4-step CFRA is initiated in at least one of following ways: being initiated by a PDCCH order; being initiated by a system information (SI) request; or being initiated by a handover command.

The RO resource information for the 4-step CBRA mainly includes the RO configuration information and a correspondence between the SSB and the RO, i.e., the RO configuration information that the terminal needs to determine and the correspondence between the SSB and the RO that the terminal needs to determine.

For the above three initiating ways, when the initiating way is being initiated by an SI request or being initiated by a handover command, the terminal needs to determine the RO resource information and the correspondence between the SSB and the RO in the RO resource information for the initiated 4-step CFRA based on the RO resource information for the 4-step CBRA in the specified release.

In the case that the initiating way is being initiated by a PDCCH order, since information such as SSB index and PRACH mask index will be indicated by the network side device in the PDCCH and the terminal may determine the correspondence between SSB and RO based on these information, the terminal only needs to determine the RO configuration information in the RO resource information for the initiated 4-step CFRA based on the RO resource information for the 4-step CBRA in the specified release.

That is to say, for the above three initiating ways, the terminal needs to determine the RO configuration information in the RO resource information for the initiated 4-step CFRA based on the RO resource information for the 4-step CBRA in the specified release. For example, the RO configuration information in the RO resource information for the 4-step CBRA in the specified release may be determined as the RO configuration information in the RO resource information for the initiated 4-step CFRA. When initiating way is being initiated by an SI request or being initiated by a Handover command, the terminal needs to further determine the correspondence between the SSB and the RO in the RO resource information for the initiated 4-step CFRA. Details about the determination of the correspondence will be described in subsequent embodiments.

In addition, when the initiating way is being initiated by a PDCCH order, in this embodiment, the network side device may not indicate any RO configuration information in the RO resource information for the CFRA, and the terminal may determine the RO configuration information in the RO resource information for the initiated 4-step CFRA based on the RO configuration information in the RO resource information for the 4-step CBRA. Or, the network side device may indicate the RO configuration information in the RO resource information for CFRA through Downlink Control Information (DCI) in the PDCCH, and the terminal may determine the RO configuration information in the RO resource information for the initiated 4-step CFRA based on the RO configuration information indicated by the DCI.

FIG. 3 is a schematic flowchart illustrating another method for determining RO resource information according to an embodiment of the present invention. As illustrated in FIG. 3, determining the RO configuration information in the RO resource information for the initiated 4-step CFRA based on the RO configuration information of the RO resource information for the 4-step CBRA in the specified release includes the following.

In step S301, the RO configuration information in the RO resource information for the 4-step CBRA in the specified release is determined as the RO configuration information in the RO resource information for the initiated 4-step CFRA.

In an embodiment, the specified release may be the legacy release, and then the terminal may determine the RO configuration information in the RO resource information for the 4-step CBRA in the legacy release as the RO configuration information in the RO resource information of the initiated 4-step CFRA.

FIG. 4 is a schematic flowchart illustrating another method for determining RO resource information according to an embodiment of the present invention. As illustrated in FIG. 4, determining the RO configuration information in the RO resource information for the 4-step CBRA in the specified release as the RO configuration information in the RO resource information for the 4-step CFRA includes the following.

In step S401, the RO configuration information in a subset or all of multiple pieces of RO resource information for the 4-step CBRA in the R17 is determined as the RO configuration information in the RO resource information for the initiated 4-step CFRA.

In an embodiment, the specified release may be the R17. Since different CBRA configuration information may be configured for different features in the R17, the terminal may be configured with multiple pieces of RO resource information for the 4-step CBRA in the R17.

In this case, the terminal may determine the RO configuration information in a subset of multiple pieces of RO resource information for the 4-step CBRA in the R17 as the RO configuration information in the RO resource information for the initiated 4-step CFRA. Or, the terminal may determine the RO configuration information in all of the multiple pieces of resource information for the 4-step CBRA in the R17 as the RO configuration information in the RO resource information for the initiated 4-step CFRA.

In determining by the terminal the RO configuration information in the subset of the multiple pieces of RO resource information for the 4-step CBRA in the R17 as the RO configuration information in the RO resource information for the initiated 4-step CFRA, the subset of the resource information may be determined based on a predefined 4-step CBRA configuration information list in the R17. For example, in the list, there are multiple pieces of RO configuration information arranged in a certain order, and the subset of the resource information may be the first n configuration information in the list, where n is an integer greater than or equal to 1.

In addition, determining the RO configuration information in all of the resource information as the RO configuration information in the RO resource information for the initiated 4-step CFRA means that the ROs configured by the RO configuration information in all resource information are useable for the terminal.

In an embodiment, determining the RO configuration information in the subset or all of the multiple pieces of RO resource information for the 4-step CBRA in the R17 as the RO configuration information in the RO resource information for the initiated 4-step CFRA includes:

when receiving an indication from the network side device for instructing to determine the RO resource information for the initiated 4-step CFRA based on the RO resource information for the 4-step CBRA in the R17, determining the RO configuration information in the subset or all of the multiple pieces of RO resource information for the 4-step CBRA in the R17 as the RO configuration information in the RO resource information for the initiated 4-step CFRA.

The method also includes:
when not receiving an indication from the network side device for instructing to determine the RO configuration information in the RO resource information for the initiated 4-step CFRA based on the RO configuration information in the RO resource information for the 4-step CBRA in the R17, determining the RO configuration information in the RO resource information for the initiated 4-step CFRA based on the RO configuration information in the RO resource information for the 4-step CBRA in the legacy release.

In an embodiment, the terminal may determine, based on the indication from the network side device, whether to determine the RO configuration information in the subset or all of the multiple pieces of RO resource information for the 4-step CBRA in the R17 as the RO configuration information in the RO resource information for the initiated 4-step CFRA.

For example, when receiving an indication from the network side device for instructing to determine the RO resource information for the initiated 4-step CFRA based on the RO resource information for the 4-step CBRA in the R17, the terminal may determine the RO configuration information in the subset or all of the multiple pieces of RO resource information for the 4-step CBRA in the R17 as the RO configuration information in the RO resource information for the initiated 4-step CFRA.

When the indication, from the network side device, for instructing the terminal to determine the RO configuration information in the RO resource information for the initiated the 4-step CBRA based on the RO configuration information in the RO resource information for the 4-step CBRA in the R17, the terminal may determine the RO configuration information in the RO resource information for the initiated the 4-step CBRA based on the RO configuration information in the RO resource information for the 4-step CBRA in the legacy release.

In an embodiment, determining the RO configuration information in the subset or all of the multiple pieces of RO resource information for the 4-step CBRA in the R17 as the RO configuration information in the RO resource information for the initiated 4-step CFRA includes:
when the terminal supports to determine the RO configuration information in the RO resource information for the initiated 4-step CFRA based on the RO configuration information in the RO resource information for the 4-step CBRA in the R17, determining the RO configuration information in the subset or all of the multiple pieces of RO resource information for the 4-step CBRA in the R17 as the RO configuration information in the RO resource information for the initiated 4-step CFRA.

The method further includes:
when the terminal does not support to determine the RO configuration information in the RO resource information for the initiated 4-step CFRA based on the RO configuration information in the RO resource information for the 4-step CBRA in the R17, determining the RO configuration information in the RO resource information for the initiated 4-step CFRA based on the RO configuration information in the RO resource information for the 4-step CBRA in the legacy release.

In an embodiment, the terminal may determine, based on its own capabilities, whether to determine the RO configuration information in the subset or all of the multiple pieces of RO resource information for the 4-step CBRA in the R17 as the RO configuration information in the RO resource information for the initiated 4-step CFRA.

For example, when the terminal's own capabilities support to determine the RO resource information for the initiated 4-step CFRA based on the RO resource information for the 4-step CBRA in the R17, the RO configuration information in the subset or all of the multiple pieces of RO resource information for the 4-step CBRA in the R17 may be determined as the RO configuration information in the RO resource information for the initiated 4-step CFRA.

When the terminal's own capabilities does not support to determine the RO resource information for the initiated 4-step CFRA based on the RO resource information for the 4-step CBRA in the R17, the RO configuration information in the RO resource information for the initiated 4-step CFRA may be determined based on the RO configuration information in the RO resource information for the 4-step CBRA in the legacy release.

In an embodiment, the capabilities of the terminal may also include whether the terminal supports for features such as Slicing, SDT, CE, or Redcap. The terminal may determine feature(s), among these features, supported by its own capabilities and then determine the one or more RO resource information for the 4-step CBRA corresponding to the supported feature(s) from the multiple pieces of RO resource information for the 4-step CBRA in the R17. Further, the terminal may determine the one or more RO resource information for the 4-step CBRA as the RO configuration information in the RO resource information for the initiated 4-step CFRA.

For example, the network side device has configured 4 RO resource information for the 4-step CBRA in the R17 for the terminal respectively for the four features, i.e., the Slicing, the SDT, the CE and the Redcap. The capabilities of the terminal only support two features, e.g., the CE and the Redcap. Thus, the terminal may determine 2 RO resource information for the 4-step CBRA corresponding to the features CE and the Redcap from the four RO resource information for the 4-step CBRA in the R17, and then determines the two determined RO resource information for the 4-step CBRA as the RO configuration information in the RO resource information for the initiated 4-step CFRA.

In an embodiment, from the multiple pieces of RO resource information for the 4-step CBRA in the R17, determining the RO configuration information in the subset or all of the multiple pieces of RO resource information for the 4-step CBRA in the R17 as the RO configuration information in the RO resource information for the initiated 4-step CFRA includes:
based on a terminal implementation, determining the RO configuration information in the subset or all of the multiple pieces of RO resource information for the 4-step CBRA in the R17 as the RO configuration information in the RO resource information for the initiated 4-step CFRA.

For example, when based on the terminal's own implementation, the terminal does not determine the RO configuration information in the subset or all of the multiple pieces of RO resource information for the 4-step CBRA in R17 as the RO configuration information in the RO resource information for the initiated 4-step CFRA, the terminal determines the RO configuration information in the RO resource information for the initiated 4-step CFRA based on the RO configuration information in the RO resource information for the 4-step CBRA in the legacy release.

For example, based on the terminal's own implementation, the terminal may the RO configuration information in the subset of the multiple pieces of RO resource information for the 4-step CBRA in the R17 as the RO configuration information in the RO resource information for the initiated 4-step CFRA.

For example, based on the terminal's own implementation, the terminal may, from the multiple pieces of RO resource information for the 4-step CBRA in the R17, the RO configuration information in all of the multiple pieces of RO resource information for the 4-step CBRA in the R17 as the RO configuration information in the RO resource information for the initiated 4-step CFRA.

It is noteworthy that, embodiments regarding the terminal implementation may be combined with the aforementioned embodiments regarding the indication from the network side device. For example, the network side device instructs the terminal to determine the RO configuration information in the subset or all of the multiple pieces of RO resource information for the 4-step CBRA in the R17 as the RO configuration information in the RO resource information for the initiated 4-step CFRA. Based on the terminal's implementation, the terminal may determine, from the multiple pieces of RO resource information for the 4-step CBRA in the R17, the RO configuration information in one RO resource information for the 4-step CBRA in the R17 as the RO configuration information in the RO resource information for the initiated 4-step CFRA.

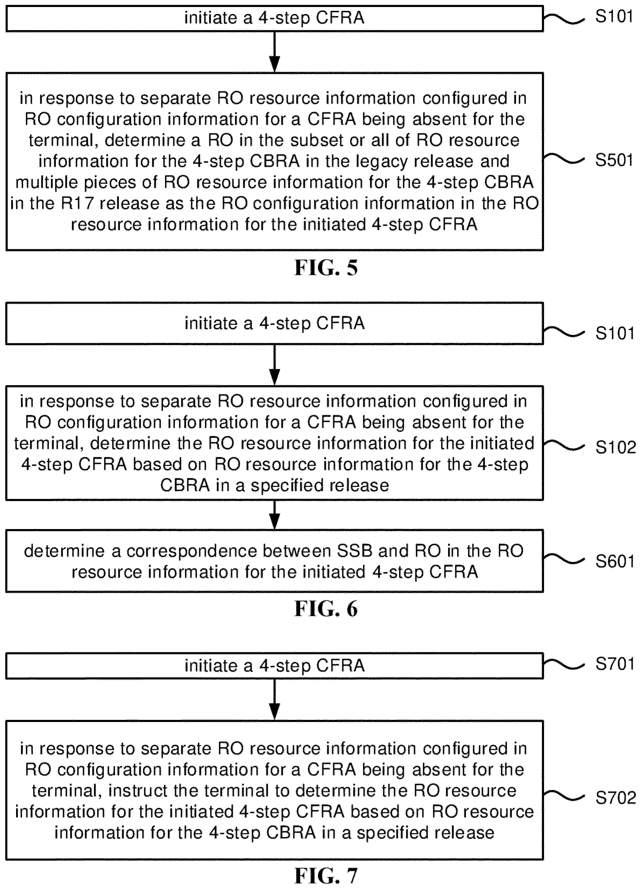

FIG. 5 is a schematic flowchart illustrating another method for determining RO resource information according to an embodiment of the present invention. As illustrated in FIG. 5, determining the RO configuration information in the RO resource information for the 4-step CBRA in the specified release as the RO configuration information in the RO resource information for the initiated 4-step CFRA includes the following.

In step S501, the RO configuration information in a subset or all of the RO resource information for the 4-step CBRA in the legacy release and the multiple pieces of RO resource information for the 4-step CBRA in the R17 is determined as the RO configuration information in the RO resource information for the initiated 4-step CFRA.

In an embodiment, the specified release may include the legacy release and the R17. Since in the R17, different CBRA configuration information may be configured for different features, the terminal may be configured with multiple pieces of RO resource information for the 4-step CBRA in the R17.

In this case, the terminal may determine the RO configuration information in the subset (one or more) of the RO resource information for the 4-step CBRA in the legacy release and the multiple pieces of RO resource information for the 4-step CBRA in the R17 as the RO configuration information in the RO resource information for the initiated 4-step CFRA, or the RO configuration information in all of the resource information as the RO configuration information in the RO resource information for the initiated 4-step CFRA.

When the terminal determines the RO configuration information in the subset of the multiple pieces of RO resource information for the 4-step CBRA in the R17 as the RO configuration information in the RO resource information for the initiated 4-step CFRA, the subset of resource information may be determined based on a predefined R17 4-step CBRA configuration information list. For example, multiple pieces of RO configuration information are arranged in a certain order in the list, and the subset of the resource information may be the first n configuration information in the list, where n is an integer greater than or equal to 1.

In addition, determining by the terminal the RO configuration information in all of the resource information as the RO configuration information in the RO resource information for the initiated 4-step CFRA means that the RO(s) configured by the RO configuration information in all of the resource information are usable for the terminal.

In an embodiment, determining the RO configuration information in the subset or all of the RO resource information for the 4-step CBRA in the R17 and the multiple pieces of RO resource information for 4-step CBRA in the R17 as the RO configuration information in the RO resource information for the initiated 4-step CFRA includes:

when an indication from the network side device for instructing to determine the RO resource information for the initiated 4-step CFRA based on the RO resource information for the 4-step CBRA in the legacy release and the RO resource information for the 4-step CBRA in the R17 is received, determining the RO configuration information in the subset or all of the RO resource information for the 4-step CBRA in the legacy release and the multiple pieces of RO resource information for 4-step CBRA in the R17 as the RO configuration information in the RO resource information for the initiated 4-step CFRA.

The method also includes:
when the indication from the network side device for instructing to determine the RO resource information for the initiated 4-step CFRA based on the RO resource information for the 4-step CBRA in the legacy release and the RO resource information for the 4-step CBRA in the R17 is not received, determining the RO configuration information in the RO resource information for the initiated 4-step CFRA based on the RO configuration information in the RO resource information for the 4-step CBRA in the legacy release.

In an embodiment, the terminal may determine, based on the indication from the network side device, whether to determine, from the RO resource information for the 4-step CBRA in the legacy release and the multiple pieces of RO resource information for 4-step CBRA in the R17, the RO configuration information in a subset or all of the resource information as the RO configuration information in the RO resource information for the initiated 4-step CFRA.

For example, when an indication from the network side device for instructing to determine the RO resource information for the initiated 4-step CFRA based on the RO resource information for the 4-step CBRA in the legacy release and the RO resource information for the 4-step CBRA in the R17 is received, the RO configuration information in the subset or all of the RO resource information for the 4-step CBRA in the legacy release and the multiple pieces of RO resource information for 4-step CBRA in the R17 is determined as the RO configuration information in the RO resource information for the initiated 4-step CFRA.

When the indication from the network side device for instructing to determine the RO resource information for the initiated 4-step CFRA based on the RO resource information for the 4-step CBRA in the legacy release and the RO resource information for the 4-step CBRA in the R17 is not received, the RO configuration information in the RO resource information for the initiated 4-step CFRA is determined based on the RO configuration information in the RO resource information for the 4-step CBRA in the legacy release.

In an embodiment, determining the RO configuration information in the subset or all of the RO resource information for the 4-step CBRA in the legacy release and the multiple pieces of RO resource information for the 4-step CBRA in the R17 as the RO configuration information in the RO resource information for the 4-step CFRA includes:
when the terminal supports to determine the RO configuration information for the initiated 4-step CFRA based on the RO resource information for the 4-step CBRA in the R17, determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

The method also includes:
when the terminal does not support to determine the RO configuration information for the initiated 4-step CFRA based on the RO resource information for the 4-step CBRA in the R17, determining the RO configuration information in the RO resource information for the initiated 4-step CFRA based on the RO configuration information in the RO resource information for the 4-step CBRA in the legacy release.

In an embodiment, the terminal may determine based on its own capabilities whether to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

For example, when the terminal's own capabilities support to determine the RO resource information for the initiated 4-step CFRA based on the RO resource information for the 4-step CBRA in the R17 the terminal may determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CBRA.

When the terminal's own capabilities does not support to determine the RO resource information for the initiated 4-step CFRA based on the RO resource information for the 4-step CBRA in the R17, the terminal may determine the RO configuration information in the RO resource information for the initiated 4-step CBRA based on the RO configuration information in the RO resource information for the 4-step CBRA in the legacy release.

In an embodiment, the capabilities of the terminal may also include whether the terminal supports for features such as Slicing, SDT, CE, or Redcap. The terminal may determine feature(s), among these features, supported by its own capabilities. When the terminal determines the RO resource information for the initiated 4-step CFRA based on the RO resource information for the 4-step CFRA in the R17, the terminal determines the one or more RO resource information for the 4-step CBRA corresponding to the supported feature(s) from the multiple pieces of RO resource information for the 4-step CBRA in the R17. Further, the terminal may determine the one or more RO resource information for the 4-step CBRA as the RO configuration information in the RO resource information for the initiated 4-step CFRA.

For example, the network side device has configured 4 RO resource information for the 4-step CBRA in the R17 for the terminal respectively for the four features, i.e., the Slicing, the SDT, the CE and the Redcap. The capabilities of the terminal only support two features, e.g., the CE and the Redcap. Thus, the terminal may determine two RO resource information for the 4-step CBRA corresponding to the features CE and the Redcap from the four RO resource information for the 4-step CBRA in the R17, and then determines the two determined RO resource information for the 4-step CBRA as the RO configuration information in the RO resource information for the initiated 4-step CFRA.

In an embodiment, determining the RO configuration information in the subset or all of the multiple pieces of RO resource information for the 4-step CBRA in the R17 as the RO configuration information in the RO resource information for the initiated 4-step CFRA includes:
based on a terminal implementation, determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

For example, the terminal itself implementation may be determining RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

For example, the terminal itself implementation may be determining the RO configuration information in the subset or all of the multiple pieces of RO resource information for the 4-step CBRA in the R17 as the RO configuration information in the RO resource information for the initiated 4-step CFRA.

For example, the terminal itself implementation may be determining the RO configuration information in the RO resource information for the initiated 4-step CFRA only based on the RO resource information for the 4-step CBRA in the legacy release.

FIG. 6 is a schematic flowchart illustrating another method for determining RO resource information according to an embodiment of the present invention. As illustrated in FIG. 6, the 4-step CFRA is initiated in at least one of following ways: being initiated by an SI request or being initiated by a Handover command. The method also includes the following.

In step S601, a correspondence between SSB and RO in the RO resource information for the initiated 4-step CFRA is determined.

In an embodiment, based on foregoing embodiments, it may be known that for the above three initiating ways, the terminal needs to determine the RO configuration information in the RO resource information for the initiated 4-step CFRA based on the RO resource information for the 4-step CBRA in the specified release. For example, the RO configuration information in the RO resource information for the 4-step CBRA in the specified release may be determined as the RO configuration information in the RO resource information for the initiated 4-step CFRA.

When the initiating way is being initiated by an SI request or being initiated by a Handover command, the terminal needs to further determine the correspondence between the SSB and the RO in the RO resource information for the initiated 4-step CFRA. Furthermore, the terminal may determine the RO(s) used by the initiated 4-step CFRA based on the RO configuration information and the correspondence.

In an embodiment, determining the correspondence between SSB and RO in the RO resource information for the 4-step CFRA includes:
determining the correspondence between the SSB and RO in the RO resource information for the 4-step CBRA in the specified release as the correspondence between SSB and RO in the RO resource information for the initiated 4-step CFRA.

After the terminal determines the RO configuration information in the RO resource information for the 4-step CBRA in the specified release as the RO configuration information in the RO resource information for the initiated 4-step CFRA based on foregoing embodiments, the terminal may further determine the correspondence between SSB and RO in the RO resource information for the 4-step CBRA in the specified release as the correspondence between SSB and RO in the RO resource information for the initiated 4-step CFRA. That is, the RO configuration information and the correspondence between SSB and RO may belong to the same RO resource information.

In an embodiment, determining the correspondence between SSB and RO in the RO resource information for the initiated 4-step CFRA includes:
determining the correspondence between SSB and RO in the RO resource information for the initiated 4-step CFRA based on the correspondence between the SSB and the RO in the RO resource information for the 4-step CBRA in each release preconfigured by the network side device for the terminal.

After the terminal determines the RO configuration information in the RO resource information for the 4-step CBRA in the specified release as the RO configuration information in the RO resource information for the initiated 4-step CFRA based on foregoing embodiments, the terminal may further determine the correspondence between SSB and RO in the RO resource information for the initiated 4-step CFRA based on the correspondence between the SSB and the RO in the RO resource information (not limited to the RO resource information for the 4-step CBRA in the specified release) for the 4-step CBRA in each release preconfigured by the network side device for the terminal.

It is noteworthy that when there are multiple correspondences between the SSB and the RO in the RO resource information for the 4-step CBRA in all releases that the network side device pre-configures for the terminal, the terminal may determine one of the correspondences between the SSB and the RO. The correspondences between the SSB and the RO are characterized by numerical values, such as 1/8, 1/4, 1/2, 1, 2, 4, 8, 16, or others. The terminal may choose one of the numerical values, such as the largest or smallest value.

In an embodiment, determining the correspondence between SSB and RO in the RO resource information for the initiated 4-step CFRA includes:
determining the correspondence between the SSB and the RO in the RO resource information for the initiated 4-step CFRA based on a terminal implementation.

The following embodiments describe from the network side how the terminal determines the RO resource information for the initiated 4-step CFRA in the case of an indication from the network side device. It is noteworthy that the indication from the network side device is only one of ways for the terminal to determine the RO resource information for the initiated 4-step CFRA based on the RO resource information for the 4-step CBRA in the specified release. The terminal may also determine the RO resource information for the initiated 4-step CFRA based on the RO resource information for the 4-step CBRA in the specified release based on a protocol.

FIG. 7 is a schematic flowchart illustrating a method for indicating RO resource information according to an embodiment of the present invention. The method for indicating RO resource information illustrated in embodiments may be performed by a network side device. The network-side device may communicate with a terminal. The terminal includes is selected from a group including, but not being limited to, a mobile phone, a tablet computer, a wearable device, a sensor, an Internet of Things, or other communication devices. The network side device is selected from a group including, but not being limited to, a network side device in fourth generation (4G), fifth generation (5G), sixth generation (6G) and other communication systems, such as base stations, a core network, or others.

As illustrated in FIG. 7, the method for indicating RO resource information may include the following.

In step S701, 4-step CFRA is initiated.

In step S702, when separate RO resource information configured in RO configuration information for the CFRA is absent for the terminal, the terminal is instructed to determine the RO resource information for the initiated 4-step CFRA based on the RO resource information for the 4-step CBRA in the specified release.

In an embodiment, the network side device may initiate the terminal to perform the 4-step CFRA under certain circumstances. The 4-step CFRA is initiated in at least one of the following ways:
being initiated by a PDCCH order; being initiated by an SI request; or being initiated by a Handover command.

After the network side device initiates the terminal to perform the 4-step CFRA, the terminal needs to determine the RO resource information for the 4-step CFRA. For example, the terminal determines whether the CFRA configuration information includes the RO resource information independently configured for the terminal. When the CFRA configuration information includes the RO resource information configured independently for the terminal, the terminal may determine, based on the RO resource information independently configured for the terminal, the RO(s) at which the 4-step CFRA is initiated. When the CFRA configuration information does not include any RO resource information configured separately for the terminal, the terminal may determine the RO resource information for the initiated 4-step CFRA based on the RO resource information for the 4-step CBRA.

According to embodiments of the present invention, the network side device may instruct the terminal to determine the RO resource information for the initiated 4-step CFRA based on the RO resource information for the 4-step CBRA in the specified release. Therefore, even if the terminal is configured with the RO resource information for the 4-step CBRA in the legacy release and the RO resource information for the 4-step CBRA in the R17, the terminal may accurately determine which release of RO resource information for the 4-step CBRA is used to determine the RO resource information for the initiated 4-step CFRA, thereby avoiding the technical problem that it is difficult to determine which release of RO resource information for the 4-step CBRA is used to determine the RO resource information for the 4-step CFRA when there are RO resource information for the 4-step CBRA in multiple releases for the terminal to select.

It is noteworthy that in the related art (such as the R15 and the R16), the information element corresponding to the 4-step CBRA configuration information is RACH-ConfigCommon, and thus the RACH-ConfigCommon refers to the 4-step CBRA configuration information in the legacy release by default.

According to embodiments of the present invention, in order to clearly specify which release is the "specified release", the information element RACH-ConfigCommon may be adjusted.

For example, the CBRA configuration in the R17 may be distinguished from the CBRA configuration in the legacy release by different suffixes, such as RACH-ConfigCommon-r17.

For example, the CBRA configuration in the R17 may be distinguished from the CBRA configuration in the legacy release by different names, such as RACH-ConfigCommonExt-R17.

In an embodiment, the specified release includes at least one of legacy release or R17. In an embodiment, the legacy release includes at least one of R15 or R16.

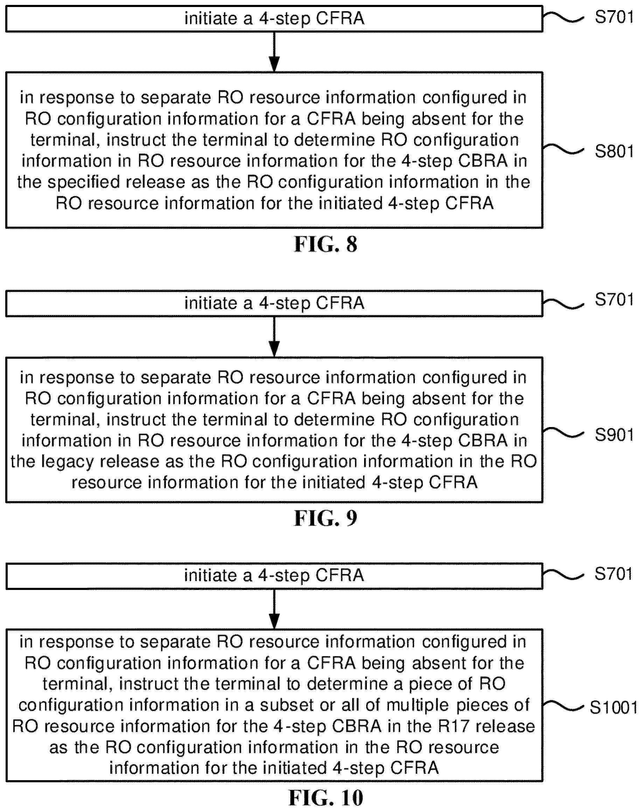

FIG. 8 is a schematic flowchart illustrating another method for indicating RO resource information according to an embodiment of the present invention. As illustrated in FIG. 8, instructing the terminal to determine the RO resource information for the initiated 4-step CFRA based on the RO resource information for the 4-step CBRA in the specified release includes the following.

In step S801, the terminal is instructed to determine the RO configuration information in the RO resource information for the 4-step CBRA in the specified release as the RO configuration information in the RO resource information for the initiated 4-step CFRA.

In an embodiment, the 4-step CFRA is initiated in at least one of following ways: being initiated by a PDCCH order; being initiated by an SI request; or being initiated by a handover command.

The RO resource information for the 4-step CBRA mainly includes the RO configuration information and a correspondence between SSB and RO, i.e., the RO configuration information that the terminal needs to determine and the correspondence between SSB and RO that the terminal needs to determine.

For the above three initiating ways, when the initiating way is being initiated by the SI request or being initiated by the handover command, the terminal needs to determine the RO resource information and the correspondence between the SSB and the RO in the RO resource information for the initiated 4-step CFRA based on the RO resource information for the 4-step CBRA in the specified release.

In the case that the initiating way is being initiated by the PDCCH order, since information such as SSB index and PRACH mask index will be indicated by the network side device in the PDCCH and the terminal may determine the correspondence between SSB and RO based on these information, the network side device only needs to instruct the terminal to determine the RO configuration information in the RO resource information for the initiated 4-step CFRA based on the RO resource information for the 4-step CBRA in the specified release.

That is to say, for the above three initiating ways, the network side device needs to instruct the terminal to determine the RO configuration information in the RO resource information for the initiated 4-step CFRA based on the RO resource information for the 4-step CBRA in the specified release. For example, the network side device may instruct the terminal to determine the RO configuration information in the RO resource information for the 4-step CBRA in the specified release as the RO configuration information in the RO resource information for the initiated 4-step CFRA. When the initiating way is being initiated by the SI requestor being initiated by the Handover command, the network side device needs to instruct the terminal to further determine the correspondence between the SSB and the RO in the RO resource information for the initiated 4-step CFRA. Details about the determination of the correspondence will be described in subsequent embodiments.

In addition, when the initiating way is being initiated by the PDCCH order, in this embodiment, the network side device may not indicate any RO configuration information in the RO resource information for the CFRA, and the terminal may determine the RO configuration information in the RO resource information for the initiated 4-step CFRA based on the RO configuration information in the RO resource information for the 4-step CBRA. Or, the network side device may indicate the RO configuration information in the RO resource information for CFRA through DCI in the PDCCH, and the terminal may determine the RO configuration information in the RO resource information for the initiated 4-step CFRA based on the RO configuration information indicated by the DCI.

FIG. 9 is a schematic flowchart illustrating another method for indicating RO resource information according to an embodiment of the present invention. As illustrated in FIG. 9, instructing the terminal to determine the RO configuration information in the RO resource information for the 4-step CBRA in the specified release as the RO configuration information in the RO resource information for the initiated 4-step CFRA includes the following.

In step S901, the terminal is instructed to determine the RO configuration information in the RO resource information for the 4-step CBRA in the legacy release as the RO configuration information in the RO resource information for the initiated 4-step CFRA.

In an embodiment, the specified release may be the legacy release, and the network side device may instruct the terminal to determine the RO configuration information in the RO resource information for the 4-step CBRA in the legacy release as the RO configuration information in the RO resource information for the initiated 4-step CFRA.

FIG. 10 is a schematic flowchart illustrating another method for determining RO resource information according to an embodiment of the present invention. As illustrated in FIG. 10, instructing the terminal to determine the RO configuration information in the RO resource information for the 4-step CBRA in the specified release as the RO configuration information in the RO resource information for the initiated 4-step CFRA includes the following.

In step S1001, the terminal is instructed to determine the RO configuration information in the subset or all of the multiple pieces of RO resource information for the 4-step CBRA in the R17 as the RO configuration information in the RO resource information for the initiated 4-step CFRA.

In an embodiment, the specified release may be the R17. Since different CBRA configuration information may be configured for different features in the R17, the terminal may be configured with multiple pieces of R17-release RO resource information for the 4-step CBRA.

In this case, the network side device may instruct the terminal to determine the RO configuration information in the subset (one or more) of the multiple pieces of RO resource information for the 4-step CBRA in the R17 as the RO configuration information in the RO resource information for the initiated 4-step CFRA, or the RO configuration information in all of the multiple pieces of RO resource information for the 4-step CBRA in the R17 as the RO configuration information in the RO resource information for the initiated 4-step CFRA.

In instructing by the network side device the terminal to determine the RO configuration information in the subset of the multiple pieces of RO resource information for the 4-step CBRA in the R17 as the RO configuration information in the RO resource information for the initiated 4-step CFRA, the subset of the resource information may be determined based on a predefined 4-step CBRA configuration information list in the R17. For example, in the list, there are multiple pieces of RO configuration information arranged in a certain order, and the subset of the resource information may be the first n configuration information in the list, where n is an integer greater than or equal to 1.

In addition, instructing by the network side device the terminal to determine the RO configuration information in all of the resource information as the RO configuration information in the RO resource information for the initiated 4-step CFRA means that the RO(s) configured by the RO configuration information in all resource information are useable for the terminal.

In an embodiment, instructing the terminal to determine the RO configuration information in the subset or all of the multiple pieces of RO resource information for the 4-step CBRA in the R17 as the RO configuration information in the RO resource information for the initiated 4-step CFRA includes:
instructing the terminal to determine the RO configuration information in the subset or all of the multiple pieces of RO resource information for the 4-step CBRA in the R17 as the RO configuration information in the RO resource information for the initiated 4-step CFRA.

In an embodiment, when the network side device instructs the terminal to determine the RO resource information for the initiated 4-step CFRA based on the RO resource information for the 4-step CBRA in the R17, the terminal determines the RO configuration information in the subset or all of the multiple pieces of RO resource information for the 4-step CBRA in the R17 as the RO configuration information in the RO resource information for the initiated 4-step CFRA.

When the network side device does not instruct the terminal to determine the RO configuration information in the RO resource information for the initiated 4-step CFRA based on the RO configuration information in the RO resource information for the 4-step CBRA in the R17, the terminal may determine the RO configuration information in the RO resource information for the initiated 4-step CFRA based on the RO configuration information in the RO resource information for the 4-step CBRA in the legacy release.

In an embodiment, instructing the terminal to determine the RO configuration information in the subset or all of the multiple pieces of RO resource information for the 4-step CBRA in the R17 as the Ro configuration information in the RO resource information for the initiated 4-step CFRA includes:

when the terminal supports to determine the RO configuration information in the RO resource information for the 4-step CFRA based on the RO configuration information in the RO resource information for the initiated 4-step CBRA in the R17, instructing the terminal to determine the RO configuration information in the subset or all of the multiple pieces of RO resource information for the 4-step CBRA in the R17 as the RO configuration information in the RO resource information for the initiated 4-step CFRA.

The method also includes:
when the terminal does not support to determine the RO resource information for the 4-step CFRA based on the RO resource information for the 4-step CBRA in the R17, instructing the terminal to determine the RO configuration information in the RO resource information for the initiated 4-step CFRA based on the RO configuration information in the RO resource information for the 4-step CBRA in the legacy release.

In an embodiment, the network side device may determine, based on the terminal's own capabilities, whether to instruct the terminal to determine the RO configuration information in the subset or all of the multiple pieces of RO resource information for the 4-step CBRA in the R17 as RO configuration information in the RO resource information for the initiated 4-step CFRA.

For example, when the network side device determines that the terminal is capable of supporting to determine the RO resource information for the initiated 4-step CFRA based on the RO resource information for the 4-step CBRA in the R17 (for example the terminal supports one or a combination of multiple features introduced in the R17), the network side device may instruct the terminal to determine the RO configuration information in the subset or all of the multiple pieces of RO resource information for the 4-step CBRA in the R17 as the RO configuration information in the RO resource information for the initiated 4-step CFRA.

When the network side device determines that the capabilities of the terminal do not support the terminal to determine the RO resource information for the initiated 4-step CFRA based on the RO resource information for the 4-step CBRA in the R17, the terminal is instructed to determine the RO configuration information in the RO resource information for the initiated 4-step CFRA based on the RO configuration information in the RO resource information for the 4-step CBRA in the legacy release.

In an embodiment, the capabilities of the terminal may also include whether the terminal supports for features such as Slicing, SDT, CE, or Redcap. The network side device may determine, based on the terminal, feature(s), among these features, supported by the terminal and then determine the one or more RO resource information for the 4-step CBRA corresponding to the feature(s) supported by the terminal from the multiple pieces of RO resource information for the 4-step CBRA in the R17. Further, the network side device instructs the terminal to determine the one or more RO resource information for the 4-step CBRA as the RO configuration information in the RO resource information for the initiated 4-step CFRA.

For example, the network side device has configured 4 RO resource information for the 4-step CBRA in the R17 for the terminal respectively for the four features, i.e., the Slicing, the SDT, the CE and the Redcap. The network side device determines, based on the capabilities of the terminal, that the terminal only support two features, e.g., the CE and the Redcap. Thus, the network side terminal may determine 2 RO resource information for the 4-step CBRA corresponding to the features CE and the Redcap from the four RO resource information for the 4-step CBRA in the R17, and then instructs the terminal to determine the two determined RO resource information for the 4-step CBRA as the RO configuration information in the RO resource information for the initiated 4-step CFRA.

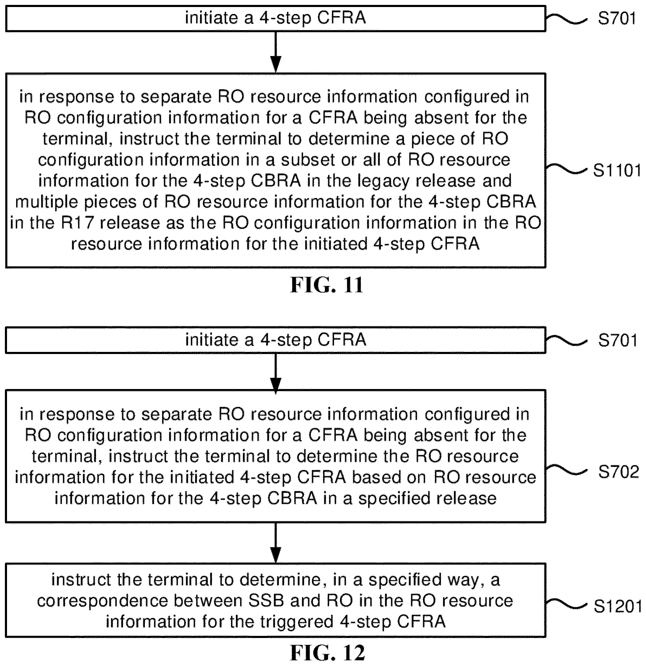

FIG. 11 is a schematic flowchart illustrating another method for determining RO resource information according to an embodiment of the present invention. As illustrated in FIG. 11, instructing the terminal to determine the RO configuration information in the RO resource information for the 4-step CBRA in the specified release as the RO configuration information in the RO resource information for the initiated 4-step CFRA includes the following.

In step S1101, the terminal is instructed to determine the RO configuration information in a subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the specified release may include the legacy release and the R17. Since in the R17, different CBRA configuration information may be configured for different features, the terminal may be configured with multiple pieces of RO resource information for the 4-step CBRA in the R17.

In this case, the network side device may instruct the terminal to determine the RO configuration information in the subset (one or more) of the RO resource information for the 4-step CBRA in the legacy release and the multiple pieces of RO resource information for the 4-step CBRA in the R17 as the RO configuration information in the RO resource information for the initiated 4-step CFRA, or the RO configuration information in all of the RO resource information for the 4-step CBRA in the legacy release and the multiple pieces of RO resource information for the 4-step CBRA in the R17 as the RO configuration information in the RO resource information for the initiated 4-step CFRA.

When the network side device instructs the terminal to determine the RO configuration information in the subset of the multiple pieces of RO resource information for the 4-step CBRA in the R17 as the RO configuration information in the RO resource information for the initiated 4-step CFRA, the subset of the resource information may be determined based on a predefined R17 4-step CBRA configuration information list. For example, multiple pieces of RO configuration information are arranged in a certain order in the list, and the subset of the resource information may be the first n configuration information in the list, where n is an integer greater than or equal to 1

In addition, instructing by the network side device the terminal to determine the RO configuration information in all of the resource information as the RO configuration information in the RO resource information for the initiated 4-step CFRA means that the RO(s) configured by the RO configuration information in all of the resource information are usable for the terminal.

In an embodiment, instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA includes:
instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the network side device may instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

When the network side device does not instruct the terminal to determine the RO resource information for the initiated 4-step CFRA based on the RO resource information for the 4-step CBRA in the legacy release and the RO resource information for the 4-step CBRA in the R17, the terminal may determine the RO configuration information in the RO resource information for the initiated 4-step CFRA based on the RO configuration information in the RO resource information for the 4-step CBRA in the legacy release.

In an embodiment, instructing the terminal to determine the RO configuration information in the subset or all of the RO resource information for the 4-step CBRA in the legacy release and multiple pieces of RO resource information for the 4-step CBRA in the R17 as the RO configuration information in the RO resource information for the initiated 4-step CFRA includes:
when the terminal supports to determine the RO resource information for the 4-step CFRA based on the RO resource information for the 4-step CBRA in the R17, instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

The method also includes:
when the terminal does not support to determine the RO resource information for the initiated 4-step CFRA based on the RO resource information for the 4-step CBRA in the R17, instructing the terminal to determine the RO configuration information in the RO resource information for the initiated 4-step CFRA based on the RO configuration information in the RO resource information for the 4-step CBRA in the legacy release.

In an embodiment, the network side device may determine, based on the capabilities of the terminal, whether to instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

For example, when the network side device determines that the terminal is capable of supporting to determine the RO resource information for the initiated 4-step CFRA based on the RO resource information for the 4-step CBRA in the R17 (for example, the terminal supports one or a combination of the above features introduced in the R17), the network side device may instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

When the network side device determines that the capabilities of the terminal do not support to determine the RO resource information for the initiated 4-step CFRA based on the RO resource information for the 4-step CBRA in the R17, the network side device may instruct the terminal to determine the RO configuration information in the RO resource information for the 4-step CFRA based on the RO configuration information in the RO resource information for the 4-step CBRA in the legacy release.

In an embodiment, the capabilities of the terminal may also include whether the terminal supports for features such as Slicing, SDT, CE, or Redcap. The terminal may determine feature(s), among these features, supported by its own capabilities. When the terminal at least determines the RO resource information for the initiated 4-step CFRA based on the RO resource information for the 4-step CBRA in the R17, the terminal determines the one or more RO resource information for the 4-step CBRA corresponding to the supported feature(s) from the multiple pieces of RO resource information for the 4-step CBRA in the R17. Further, the terminal may determine the one or more RO resource information for the 4-step CBRA as the RO configuration information in the RO resource information for the initiated 4-step CFRA.

For example, the network side device has configured 4 RO resource information for the 4-step CBRA in the R17 for the terminal respectively for the four features, i.e., the Slicing, the SDT, the CE and the Redcap. The capabilities of the terminal only support two features, e.g., the CE and the Redcap. Thus, the terminal may determine two RO resource information for the 4-step CBRA corresponding to the features CE and the Redcap from the four RO resource information for the 4-step CBRA in the R17, and then determines the two determined RO resource information for the 4-step CBRA as the RO configuration information in the RO resource information for the initiated 4-step CFRA.

FIG. 12 is a schematic flowchart illustrating another method for determining RO resource information according to an embodiment of the present invention. As illustrated in FIG. 12, the 4-step CFRA is initiated in at least one of following ways: being initiated by an SI request or being initiated by a handover command. The method also includes the following.

In step S1201, the terminal is instructed to determine, in a specified manner, a correspondence between SSB and RO in the RO resource information for the initiated 4-step CFRA.

In an embodiment, based on foregoing embodiments, it may be known that for the above three initiating ways, the network side device needs to instruct the terminal to determine the RO configuration information in the RO resource information for the initiated 4-step CFRA based on RO resource information for the 4-step CBRA in the specified release. For example, the RO configuration information in the RO resource information for the 4-step CBRA in the specified release may be determined as the RO configuration information in the RO resource information for the initiated 4-step CFRA.

When the initiating way is being initiated by the SI request or being initiated by the handover command, the network side device needs to further instruct the terminal to determine the correspondence between SSB and RO in the RO resource information for the initiated 4-step CFRA. Furthermore, the terminal is instructed to determine in the specified way the correspondence between SSB and RO in the RO resource information for the initiated 4-step CFRA. Further, the terminal may determine the RO(s) used by the initiated 4-step CFRA based on the RO configuration information and the correspondence.

In an embodiment, the specified way includes at least one of the following:
determining the correspondence between SSB and RO in the RO resource information for the 4-step CBRA in the specified release as the correspondence between SSB and RO in the RO resource information for the initiated 4-step CFRA; or
determining the correspondence between SSB and RO in the RO resource information for the initiated 4-step CFRA based on the correspondence between the SSB and the RO in the RO resource information for the 4-step CBRA in each release preconfigured by the network side device for the terminal (through the SI broadcast).

In an embodiment, after the terminal determines the RO configuration information in the RO resource information for the 4-step CBRA in the specified release as the RO configuration information in the RO resource information for the initiated 4-step CFRA based on foregoing embodiments, the terminal may determine the correspondence between SSB and RO in the RO resource information for the 4-step CBRA in the specified release as the correspondence between SSB and RO in the RO resource information for the initiated 4-step CFRA. That is, the RO configuration information and the correspondence between SSB and RO may belong to the same RO resource information.

In an embodiment, after the terminal determines the RO configuration information in the RO resource information for the 4-step CBRA in the specified release as the RO configuration information in the RO resource information for the initiated 4-step CFRA based on foregoing embodiments, the terminal may further determine the correspondence between SSB and RO in the RO resource information for the initiated 4-step CFRA based on the correspondence between the SSB and the RO in the RO resource information (not limited to the RO resource information for the 4-step CBRA in the specified release) for the 4-step CBRA in each release preconfigured by the network side device for the terminal.

It is noteworthy that when there are multiple correspondences between the SSB and the RO in the RO resource information for the 4-step CBRA in all releases that the network side device pre-configures for the terminal, the terminal may determine one of the correspondences between the SSBs and the RO. The correspondences between the SSB and the RO are characterized by numerical values, such as 1/8, 1/4, 1/2, 1, 2, 4, 8, 16, or others. The terminal may choose one of the numerical values, such as the largest or smallest value.

Corresponding to aforementioned embodiments of the methods for determining RO resource information and the methods for indicating RO resource information, the present invention also provides embodiments of devices for determining RO resource information and devices for indicating RO resource information.

Embodiments of the present invention provide a device for determining RO resource information. The device may be applied to a terminal. The terminal may communicate with a network side device. The terminal is selected from a group including, but not being limited to, a mobile phone, a tablet computer, a wearable device, a sensor, an Internet of Things, or other communication devices. The network side device is selected from a group including, but not being limited to, a network side device in fourth generation (4G), fifth generation (5G), sixth generation (6G) and other communication systems, such as base stations, a core network, or others.

In an embodiment, the device for determining RO resource information includes one or more processors. The one or more processors are configured to:
initiate a 4-step CFRA; and
when separate RO resource information configured in RO configuration information for the CFRA is absent for the terminal, determine RO resource information for the initiated 4-step CFRA based on the RO resource information for the 4-step CBRA in the specified release.

In an embodiment, the specified release is determined based on an indication from a network side device or determined based on a protocol.

In an embodiment, the specified release includes at least one of a legacy release or a R17.

In an embodiment, the legacy release includes at least one of a R15 or a R16.

In an embodiment, the 4-step CFRA is initiated in at least one of following ways:
being initiated by a PDCCH order;
being initiated by an SI request; or
being initiated by a handover command.

In an embodiment, the one or more processors are configured to determine the RO configuration information in the RO resource information for the 4-step CBRA in the specified release as the RO configuration information in the RO resource information for the initiated 4-step CFRA.

In an embodiment, the one or more processors are configured to determine the RO configuration information in the RO resource information for the 4-step CBRA in the legacy release as the RO configuration information in the RO resource information for the initiated 4-step CFRA.

In an embodiment, the one or more processors are configured to determine the RO configuration information in the subset or all of multiple pieces of RO resource information for the 4-step CBRA in the R17 as the RO configuration information in the RO resource information for the initiated 4-step CFRA.

In an embodiment, the one or more processors are configured to:
when receiving an indication from the network side device for instructing to determine the RO resource information for the initiated 4-step CFRA based on the RO resource information for the 4-step CBRA in the R17, determine the RO configuration information in the subset or all of the multiple pieces of RO resource information for the 4-step CBRA in the R17 as the RO configuration information in the RO resource information for the initiated 4-step CFRA.

The one or more processors are also configured to:
when an indication from the network side device for instructing the terminal to determine the RO configuration information in the RO resource information for the initiated 4-step CFRA based on the RO configuration information in the RO resource information for the 4-step CBRA in the R17 is not received, determine the RO configuration information in the RO resource information for the initiated 4-step CFRA based on the RO configuration information in RO resource information for the 4-step CBRA in the legacy release.

In an embodiment, the one or more processors are configured to:
when the terminal supports to determine the RO configuration information in the RO resource information for the initiated 4-step CFRA based on the RO configuration information in the RO resource information for the 4-step CBRA in the R17, determine the RO configuration information in the subset or all of the multiple pieces of RO resource information for the 4-step CBRA in the R17 as the RO configuration information in the RO resource information for the initiated 4-step CFRA.

The one or more processors are also configured to:
when the terminal does not support to determine the RO configuration information in the RO resource information for the initiated 4-step CFRA based on the RO configuration information in the RO resource information for the 4-step CBRA in the R17, determine the RO configuration information in the RO resource information for the initiated 4-step CFRA based on the RO configuration information in RO resource information for the 4-step CBRA in the legacy release.

In an embodiment, the one or more processors are configured to:
determine, based on an terminal implementation, the RO configuration information in the subset or all of the multiple pieces of RO resource information for the 4-step CBRA in the R17 as the RO configuration information in the RO resource information for the initiated 4-step CFRA.

In an embodiment, the one or more processors are configured to:
determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the one or more processors are configured to:
when an indication from the network side device for instructing to determine the RO resource information for the initiated 4-step CFRA based on the RO resource information for the 4-step CBRA in the legacy release and the RO resource information for the 4-step CBRA in the R17 is received, determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

The one or more processors are also configured to:
when an indication from the network side device for instructing to determine the RO resource information for the initiated 4-step CFRA based on the RO resource information for the 4-step CBRA in the legacy release and the RO resource information for the 4-step CBRA in the R17, determine the RO configuration information in the RO resource information for the initiated 4-step CFRA based on the RO configuration information in the RO resource information for the 4-step CBRA in the legacy release.

In an embodiment, the one or more processors are configured to:
when the terminal supports to determine the RO resource information for the initiated 4-step CFRA based on the RO resource information for the 4-step CBRA in the R17, determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

The one or more processors are also configured to:
when the terminal does not support to determine the RO resource information for the initiated 4-step CFRA based on the RO resource information for the 4-step CBRA in the R17, determine the RO configuration information in the RO resource information for the initiated 4-step CFRA based on the RO configuration information in the RO resource information for the 4-step CBRA in the legacy release.

In an embodiment, the one or more processors are configured to:
based on a terminal implementation, determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the 4-step CFRA is initiated in at least one of following ways: being initiated by an SI request or being initiated by a handover command. The one or more processor s are also configured to:
determine a correspondence between SSB and RO in the RO resource information for the initiated 4-step CFRA.

In an embodiment, the one or more processors are configured to:
determine the correspondence between SSB and RO in the RO resource information for the 4-step CBRA in the specified release as the correspondence between SSB and RO in the RO resource information for the initiated 4-step CFRA.

In an embodiment, the one or more processors are configured to:
determine the correspondence between SSB and RO in the RO resource information for the initiated 4-step CFRA based on the correspondence between the SSB and the RO in the RO resource information for the 4-step CBRA in each release that the network side device pre-configures for the terminal.

In an embodiment, the one or more processors are configured to:
determine the correspondence between SSB and RO in the RO resource information for the initiated 4-step CFRA based on a terminal implementation.

Embodiments of the present invention provide a device for indicating RO resource information. The device may be applied to a network side device. The network side device may communicate with a terminal. The terminal is selected from a group including, but not being limited to, a mobile phone, a tablet computer, a wearable device, a sensor, an Internet of Things, or other communication devices. The network side device is selected from a group including, but not being limited to, a network side device in fourth generation (4G), fifth generation (5G), sixth generation (6G) and other communication systems, such as base stations, a core network, or others.

In an embodiment, the device for indicating RO resource information includes one or more processors. The one or more processors are configured to:
initiate a 4-step CFRA; and
when separate RO resource information configured in RO configuration information for the CFRA is absent for the terminal, instruct the terminal to determine the RO resource information for the initiated 4-step CFRA based on RO resource information for the 4-step CBRA in a specified release.

In an embodiment, the specified release includes at least one of a legacy release or a R17.

In an embodiment, the legacy release includes at least one a R15 or a R16.

In an embodiment, the 4-step CFRA is initiated in at least one of following ways:
being initiated by a PDCCH order;
being initiated by an SI request; or
being initiated by a handover command.

In an embodiment, the one or more processors are configured to:
instruct the terminal to determine the RO configuration information in the RO resource information for the 4-step CBRA in the specified release as the RO configuration information in the RO resource information for the initiated 4-step CFRA.

In an embodiment, the one or more processors are configured to:
instruct the terminal to determine the RO configuration information in the RO resource information for the 4-step CBRA in the legacy release as the RO configuration information in the RO resource information for the initiated 4-step CFRA.

In an embodiment, the one or more processors are configured to:
instruct the terminal to determine the RO configuration information in the subset or all of multiple pieces of RO resource information for the 4-step CBRA in the R17 as the RO configuration information in the RO resource information for the initiated 4-step CFRA.

In an embodiment, the one or more processors are configured to:
instruct the terminal to determine the RO configuration information in the subset or all of multiple pieces of RO resource information for the 4-step CBRA in the R17 as the RO configuration information in the RO resource information for the initiated 4-step CFRA..

In an embodiment, the one or more processors are configured to:
when the terminal supports to determine the RO configuration information in the RO resource information for the initiated 4-step CFRA based on the RO configuration information in the RO resource information for the 4-step CBRA in the R17, instruct the terminal to determine the RO configuration information in the subset or all of the multiple pieces of RO resource information for the 4-step CBRA in the R17 as the RO configuration information in the RO resource information for the initiated 4-step CFRA.

The one or more processors are also configured to:
when the terminal does not support to determine the RO configuration information in the RO resource information for the 4-step CFRA based on the RO configuration information in the RO resource information for the 4-step CBRA in the R17, instruct the terminal to determine, the RO configuration information in the subset or all of the multiple pieces of RO resource information for the 4-step CBRA in the R17 as the RO configuration information in the RO resource information for the initiated 4-step CFRA.

In an embodiment, the one or more processors are configured to:
instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the one or more processors are configured to:
instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

In an embodiment, the one or more processors are configured to:
when the terminal supports to determine the RO resource information for the 4-step CFRA based on the RO resource information for the 4-step CBRA in the R17, instruct the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

The one or more processors are also configured to:
when the terminal does not support to determine the RO resource information for the 4-step CFRA based on the RO resource information for the 4-step CBRA in the R17, instruct the terminal to determine the RO configuration information in the RO resource information for the initiated 4-step CFRA based on the RO configuration information in the RO resource information for the 4-step CBRA in the legacy release.

In an embodiment, the 4-step CFRA is initiated in at least one of following ways: being initiated by an SI request or being initiated by a handover command. The one or more processors are also configured to:
instruct the terminal to determine, in a specified way, a correspondence between SSB and RO in the RO resource information for the initiated 4-step CFRA.

In an embodiment, the specified way includes at least one of
determining the correspondence between SSB and RO in the RO resource information for the 4-step CBRA in the specified release as the correspondence between SSB and RO in the RO resource information for the initiated 4-step CFRA; or
determining the correspondence between SSB and RO in the RO resource information for the initiated 4-step CFRA based on the correspondence between the SSB and the RO in the RO resource information for the 4-step CBRA in each release that the network side device pre-configures for the terminal.

With regard to the devices in above embodiments, the specific manner in which each module executes operations has been described in detail in embodiments of related methods, and will not be described in detail here.

As for the device embodiments which basically corresponds to the method embodiments, details may refer to the description of the method embodiments. The device embodiments described above are only illustrative, and the modules described as separate components may or may not be physically separated, and the components shown as modules may or may not be physical modules. That is, the components may be located in one place or distributed to multiple network modules. Part or all of the modules may be selected based on actual needs to achieve the purpose of the solution of embodiments of the present invention. It may be understood and implemented by those skilled in the art without creative effort.

Embodiments of the present invention further provide a communication device. The communication device includes a processor and a memory for storing a computer program. When the computer program is executed by the processor, the method for determining RO resource information described in any of above embodiments is performed.

Embodiments of the present invention further provide a communication device. The communication device includes a processor and a memory for storing a computer program. When the computer program is executed by the processor, the method for indicating RO resource information described in any of above embodiments is performed.

Embodiments of the present invention further include a computer-readable storage medium for storing a computer program. When the computer program is executed by a processor, the method for determining RO resource information described in any of above embodiments is performed.

Embodiments of the present invention further include a computer-readable storage medium for storing a computer program. When the computer program is executed by a processor, the method for indicating RO resource information described in any of above embodiments is performed.

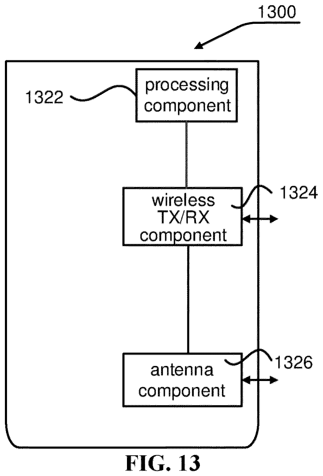

As illustrated in FIG. 13, FIG. 13 is a schematic block diagram illustrating an apparatus 1300 for indicating RO resource information according to an embodiment of the present invention. The apparatus 1300 may be provided as a base station. As illustrated in FIG. 13, the apparatus 1300 includes a processing component 1322, a wireless transmitting/receiving component 1324, an antenna component 1326, and a signal processing part specific to the wireless interface. The processing component 1322 may further include one or more processors. One of the processors in the processing component 1322 may be configured to implement the method for indicating RO resource information according to any of foregoing embodiments.

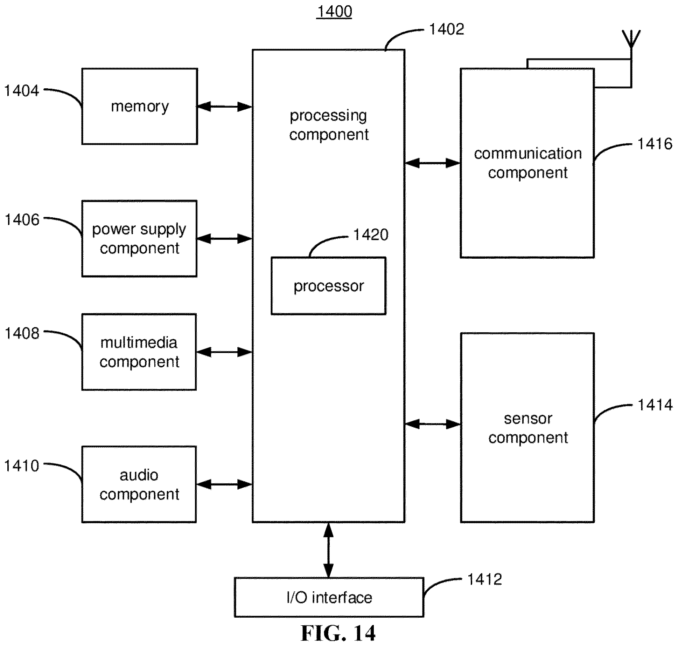

FIG. 14 is a schematic block diagram illustrating an apparatus 1400 for determining RO resource information according to an embodiment of the present invention. For example, the apparatus 1400 may be a mobile phone, a computer, a digital broadcast terminal, a messaging device, a game console, a tablet device, a medical device, a fitness device, a personal digital assistant, or the like.

As illustrated in FIG. 14, the apparatus 1400 may include one or more of the following components: a processing component 1402, a memory 1404, a power supply component 1406, a multimedia component 1408, an audio component 1410, an input/output (I/O) interface 1412, a sensor component 1414 and a communication component 1416.

The processing component 1402 generally controls overall operations of the apparatus 1400, such as those associated with display, telephone calls, data communications, camera operations, and recording operations. The processing component 1402 may include one or more processors 1420 to execute instructions to complete all or part of the steps in above-mentioned methods for determining RO resource information. Additionally, the processing component 1402 may include one or more modules that facilitate interaction between the processing component 1402 and other components. For example, the processing component 1402 may include a multimedia module to facilitate interaction between the multimedia component 1408 and the processing component 1402.

The memory 1404 is configured to store various types of data to support operations at the apparatus 1400. Examples of such data include instructions for any application or methods operating on the apparatus 1400, contact data, phonebook data, messages, pictures, videos, and the like. The memory 1404 may be implemented by any type of volatile or non-volatile memory device or a combination thereof, such as static random access memory (SRAM), electrically erasable programmable read-only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power supply component 1406 provides power to various components of the apparatus 1400. The power supply component 1406 may include a power management system, one or more power supplies, and other components associated with generating, managing, and distributing power for the apparatus 1400.

The multimedia component 1408 includes a screen that provides an output interface between the apparatus 1400 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect duration and pressure associated with the touch or swipe action. In some embodiments, the multimedia component 1408 includes a front-facing camera and/or a rear-facing camera. When the apparatus 1400 is in an operation mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 1410 is configured to output and/or input audio signals. For example, the audio component 1410 includes a microphone (MIC) configured to receive external audio signals when the apparatus 1400 is in operation modes, such as call mode, recording mode and voice recognition mode. Received audio signals may be further stored in the memory 1404 or sent via the communication component 1416. In some embodiments, the audio component 1410 also includes a speaker for outputting audio signals.

The I/O interface 1412 provides an interface between the processing component 1402 and a peripheral interface module, which may be a keyboard, a click wheel, a button, and the like. These buttons may include, but are not limited to: a home button, volume buttons, start button, and lock button.

The sensor component 1414 includes one or more sensors for providing various aspects of status assessment for the apparatus 1400. For example, the sensor component 1414 may detect the on/off state of the apparatus 1400, the relative positioning of components, such as the display and keypad of the apparatus 1400. The sensor component 1414 may also detect a change in the position of the apparatus 1400 or a component of the apparatus 1400, the presence or absence of user contact with the apparatus 1400, the orientation or acceleration/deceleration and the temperature change of the apparatus 1400. The sensor component 1414 may include a proximity sensor configured to detect the presence or absence of any physical contract of nearby objects. The sensor component 1414 may also include optical sensors, such as CMOS or CCD image sensors, for use in imaging applications. In some embodiments, the sensor component 1414 may also include an acceleration sensor, a gyroscope sensor, a magnetic sensor, a pressure sensor or a temperature sensor.

The communication component 1416 is configured to facilitate wired or wireless communication between the apparatus 1400 and other devices. The apparatus 1400 may access a wireless network based on communication standards, such as WiFi, 2G, 3G, 4G LTE, 5G NR or combinations thereof. In an embodiment, the communication component 1416 receives broadcast signals or broadcast related information from an external broadcast management system via a broadcast channel. In an embodiment, the communication component 1416 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In an embodiment, the apparatus 1400 may be programmed by one or more application specific integrated circuits (ASICs), digital signal processors (DSPs), digital signal processing devices (DSPDs), programmable logic devices (PLDs), field programmable Implemented by a gate array (FPGA), a controller, a microcontroller, a microprocessor or other electronic components, and is configured to perform the above methods for determining RO resource information.

In an embodiment, there is also provided a non-transitory computer-readable storage medium including instructions, such as a memory 1404 including instructions, which may be executed by the processor 1420 of the apparatus 1400 to perform the above methods for determining RO resource information. For example, the non-transitory computer readable storage medium may be ROM, random access memory (RAM), CD-ROM, magnetic tape, floppy disk, optical data storage device, and the like.

Other embodiments of the present invention will be readily apparent to those skilled in the art from consideration of the specification and practice of the present invention disclosed herein. The present invention is intended to cover any modification, use or adaptation of the present invention. These modifications, uses or adaptations follow the general principles of the present invention and include common knowledge or conventional technical means in the technical field not disclosed in the present invention.. The specification and examples are to be considered illustrative only, with a true scope and spirit of the present invention being indicated by the following claims.

It is understandable that the present invention is not limited to the precise constructions which have been described above and shown in the drawings, and various modifications and changes may be made without departing from the scope thereof. The scope of the present invention is limited only by the appended claims.

It is noteworthy that in the present invention, relational terms such as first and second are only used to distinguish one entity or operation from another entity or operation, and do not necessarily require or imply that there is a relationship between these entities or operations. There is no such actual relationship or order between them. The term "comprises", "includes" or any other variation thereof is intended to cover a non-exclusive inclusion such that a process, method, article or apparatus including a set of elements includes not only those elements but also other elements not expressly listed elements, or also elements inherent in such a process, method, article, or apparatus. Without further limitations, an element defined by the phrase "comprising a ..." does not exclude the presence of additional identical elements in the process, method, article or apparatus including said element.

The methods and devices according to embodiments of the present invention have been described above in detail. In this present invention, specific examples have been used to illustrate the principles and implementation methods of the present invention. The descriptions of the above embodiments are only used to help understand the methods and the core ideas of the t present invention. At the same time, for those of ordinary skill in the art, according to the idea of the present invention, there will be changes in the specific implementation and application scope. In summary, the content of this specification should not be understood as limiting the present invention.

## Claims

1. A method for determining random access occasion (RO) resource information, performed by a terminal, comprising:
initiating a 4-step Contention-Free Random Access (CFRA); and
in response to separate RO resource information configured in RO configuration information for a CFRA being absent for the terminal, determining the RO resource information for the initiated 4-step CFRA based on RO resource information for a 4-step Contention-Based Random Access (CBRA) in a specified release.

2. The method of claim 1, wherein the specified release is determined based on an indication from a network side device or based on a protocol.

3. The method of claim 1, wherein the specified release comprises at least one of:
a legacy release or a Release 17 (R17).

4. The method of claim 3, wherein the legacy release comprises at least one of:
a Release 15 (R15) or a Release 16 (R16).

5. The method of claim 3, wherein the 4-step CFRA is initiated in at least one of following ways:
being initiated by a Physical Downlink Control Channel (PDCCH) order;
being initiated by a System Information (SI) request; or
being initiated by a Handover command.

6. The method of claim 5, wherein determining the RO resource information for the initiated 4-step CFRA based on the RO resource information for the 4-step CBRA in the specified release comprises:
determining the RO configuration information in the RO resource information for the 4-step CBRA in the specified release as the RO configuration information in the RO resource information for the initiated 4-step CFRA.

7. The method of claim 6, wherein determining the RO configuration information in the RO resource information for the 4-step CBRA in the specified release as the RO configuration information in the RO resource information for the initiated 4-step CFRA comprises:
determining the RO configuration information in RO resource information for the 4-step CBRA in the legacy release as the RO configuration information in the RO resource information for the initiated 4-step CFRA.

8. The method of claim 6, wherein determining the RO configuration information in the RO resource information for the 4-step CBRA in the specified release as the RO configuration information in the RO resource information for the initiated 4-step CFRA comprises:
determining the RO configuration information in a subset or all of multiple pieces of RO resource information for the 4-step CBRA in the R17 as the RO configuration information in the RO resource information for the initiated 4-step CFRA.

9. The method of claim 8, wherein determining the RO configuration information in the subset or all of the multiple pieces of RO resource information for the 4-step CBRA in the R17 as the RO configuration information in the RO resource information for the initiated 4-step CFRA comprises:
in response to receiving an indication from a network side device for instructing to determine the RO resource information for the 4-step CFRA based on the RO resource information for the 4-step CBRA in the R17, determining the RO configuration information in the subset or all of the multiple pieces of RO resource information for the 4-step CBRA in the R17 as the RO configuration information in the RO resource information for the initiated 4-step CFRA; and
wherein the method further comprises:
in response to not receiving any indication from a network side device for instructing to determine the RO configuration information in the RO resource information for the 4-step CFRA based on the RO configuration information in the RO resource information for the 4-step CBRA in the R17, determining the RO configuration information in the RO resource information for the initiated 4-step CFRA based on the RO configuration information in the RO resource information for the 4-step CBRA in the legacy release.

10. The method of claim 8, wherein determining the RO configuration information in the subset or all of the multiple pieces of RO resource information for the 4-step CBRA in the R17 as the RO configuration information in the RO resource information for the initiated 4-step CFRA comprises:
in response to the terminal supporting to determine the RO configuration information in the RO resource information for the initiated 4-step CFRA based on the RO configuration information in the RO resource information for the 4-step CBRA in the R17, determining the RO configuration information in the subset or all of the multiple pieces of RO resource information for the 4-step CBRA in the R17 as the RO configuration information in the RO resource information for the initiated 4-step CFRA; and
wherein the method further comprises:
in response to the terminal not supporting to determine the RO resource information for the 4-step CFRA based on the RO resource information for the 4-step CBRA in the R17, determining the RO configuration information in the RO resource information for the initiated 4-step CFRA based on the RO configuration information in the RO resource information for the 4-step CBRA in the legacy release.

11. The method of claim 8, wherein determining the RO configuration information in the subset or all of the multiple pieces of RO resource information for the 4-step CBRA in the R17 as the RO configuration information in the RO resource information for the initiated 4-step CFRA comprises:
determining, based on a terminal implementation, the RO configuration information in the subset or all of the multiple pieces of RO resource information for the 4-step CBRA in the R17 as the RO configuration information in the RO resource information for the initiated 4-step CFRA.

12. The method of claim 6, wherein determining the RO configuration information in the RO resource information for the 4-step CBRA in the specified release as the RO configuration information in the RO resource information for the initiated 4-step CFRA comprises:
determining the RO configuration information in a subset or all of RO resource information for the 4-step CBRA in the legacy release and multiple pieces of RO resource information for the 4-step CBRA in the R17 as the RO configuration information in the RO resource information for the initiated 4-step CFRA.

13. The method of claim 12, wherein determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA comprises:
in response to receiving an indication from a network side device for instructing to determine the RO resource information for the initiated 4-step CFRA based on the RO resource information for the 4-step CBRA in the legacy release and the RO resource information for the 4-step CBRA in the R17, determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA; and
wherein the method further comprises:
in response to not receiving any indication from a network side device for instructing to determine the RO resource information for the initiated 4-step CFRA based on the RO resource information for the 4-step CBRA in the legacy release and the RO resource information for the 4-step CBRA in the R17, determining the RO configuration information in the RO resource information for the initiated 4-step CFRA based on the RO configuration information in the RO resource information for the 4-step CBRA in the legacy release.

14. The method of claim 12, wherein determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA comprises:
in response to the terminal supporting to determine the RO resource information for the initiated 4-step CFRA based on the RO resource information for the 4-step CBRA in the R17, determining the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA; and
wherein the method further comprises:
in response to the terminal not supporting to determine the RO resource information for the initiated 4-step CFRA based on the RO resource information for the 4-step CBRA in the R17, determining the RO configuration information in the RO resource information for the initiated 4-step CFRA based on the RO configuration information in the RO resource information for the 4-step CBRA in the legacy release.

15. The method of claim 12, wherein determining the RO configuration information in the subset or all of the multiple pieces of RO resource information for the 4-step CBRA in the R17 as the RO configuration information in the RO resource information for the initiated 4-step CFRA comprises:
determining, based on a terminal implementation, the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

16. The method of claim 5, wherein the 4-step CFRA is initiated in at least one of following ways: being initiated by the System Information (SI) request or being initiated by the Handover command; and wherein the method further comprises:
determining a correspondence between a Synchronization Signal Block (SSB) and an RO in the RO resource information for the initiated 4-step CFRA.

17. The method of claim 16, wherein determining the correspondence between the SSB and the RO in the RO resource information for the initiated 4-step CFRA comprises:
determining the correspondence between the SSB and the RO in the RO resource information for the 4-step CBRA in the specified release as the correspondence between the SSB and the RO in the RO resource information for the initiated 4-step CFRA.

18. The method of claim 16, wherein determining the correspondence between the SSB and the RO in the RO resource information for the initiated 4-step CFRA comprises:
determining the correspondence between the SSB and the RO in the RO resource information for the initiated 4-step CFRA based on a correspondence between the SSB and the RO in the RO resource information for the 4-step CBRA in each release preconfigured by a network side device for the terminal.

19. The method of claim 16, wherein determining the correspondence between the SSB and the RO in the RO resource information for the initiated 4-step CFRA comprises:
determining the correspondence between the SSB and the RO in the RO resource information for the initiated 4-step CFRA based on a terminal implementation.

20. A method for indicating random access occasion (RO) resource information, performed by a terminal, comprising:
initiating a 4-step Contention-Free Random Access (CFRA); and
in response to separate RO resource information configured in RO configuration information for a CFRA being absent for the terminal, instructing the terminal to determine the RO resource information for the initiated 4-step CFRA based on RO resource information for a 4-step Contention-Based Random Access (CBRA) in a specified release.

21. The method of claim 20, wherein the specified release comprises at least one of:
a legacy release or a Release (R17).

22. The method of claim 21, wherein the legacy release comprises at least one of:
a Release 15 (R15) or a Release 16 (R16).

23. The method of claim 21, wherein the 4-step CFRA is initiated in at least one of following ways:
being initiated by a Physical Downlink Control Channel (PDCCH) order;
being initiated by a System Information (SI) request; or
being initiated by a Handover command.

24. The method of claim 23, wherein instructing the terminal to determine the RO resource information for the initiated 4-step CFRA based on the RO resource information for the 4-step CBRA in the specified release comprises:
instructing the terminal to determine the RO configuration information in the RO resource information for the 4-step CBRA in the specified release as the RO configuration information in the RO resource information for the initiated 4-step CFRA.

25. The method of claim 24, wherein instructing the terminal to determine the RO configuration information in the RO resource information for the 4-step CBRA in the specified release as the RO configuration information in the RO resource information for the initiated 4-step CFRA comprises:
instructing the terminal to determine the RO configuration information in the RO resource information for the 4-step CBRA in the legacy release as the RO configuration information in the RO resource information for the initiated 4-step CFRA.

26. The method of claim 24, wherein instructing the terminal to determine the RO configuration information in the RO resource information for the 4-step CBRA in the specified release as the RO configuration information in the RO resource information for the initiated 4-step CFRA comprises:
instructing the terminal to determine the RO configuration information in a subset or all of multiple pieces of RO resource information for the 4-sep CBRA in the R17 as the RO configuration information in the RO resource information for the initiated 4-step CFRA.

27. The method of claim 26, wherein instructing the terminal to determine the RO configuration information in the subset or all of the multiple pieces of RO resource information for the 4-sep CBRA in the R17 as the RO configuration information in the RO resource information for the initiated 4-step CFRA comprises:
instructing the terminal to determine the RO configuration information in the subset or all of the multiple pieces of RO resource information for the 4-sep CBRA in the R17 as the RO configuration information in the RO resource information for the initiated 4-step CFRA.

28. The method of claim 26, instructing the terminal to determine the RO configuration information in the subset or all of the multiple pieces of RO resource information for the 4-sep CBRA in the R17 as the RO configuration information in the RO resource information for the initiated 4-step CFRA comprises:
in response to the terminal supporting to determine the RO configuration information in the RO resource information for the 4-step CFRA based on the RO configuration information in the RO resource information for the 4-step CBRA in the R17, instructing the terminal to determine the RO configuration information in the subset or all of the multiple pieces of RO resource information for the 4-sep CBRA in the R17 as the RO configuration information in the RO resource information for the initiated 4-step CFRA; and
wherein the method further comprises:
in response to the terminal not supporting to determine the RO configuration information in the RO resource information for the 4-step CFRA based on the RO configuration information in the RO resource information for the 4-step CBRA in the R17, instructing the terminal to determine the RO configuration information in the RO resource information for the initiated 4-step CFRA based on the RO configuration information in RO resource information for the 4-step CBRA in the legacy release.

29. The method of claim 24, wherein instructing the terminal to determine the RO configuration information in the RO resource information for the 4-step CBRA in the specified release as the RO configuration information in the RO resource information for the initiated 4-step CFRA comprises:
instructing the terminal to determine the RO configuration information in a subset or all of RO resource information for the 4-step CBRA in the legacy release and multiple pieces of RO resource information for the 4-step CBRA in the R17 as the RO configuration information in the RO resource information for the initiated 4-step CFRA.

30. The method of claim 29, wherein instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA comprises:
instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA.

31. The method of claim 29, wherein instructing the terminal to determine the RO configuration information in the subset or all of the RO resource information for the 4-step CBRA in the legacy release and the multiple pieces of RO resource information for the 4-step CBRA in the R17 as the RO configuration information in the RO resource information for the initiated 4-step CFRA comprises:
in response to the terminal supporting to determine the RO resource information for the initiated 4-step CFRA based on the RO resource information for the 4-step CBRA in the R17, instructing the terminal to determine the RO configuration information in the subset or all of the RO resource information for the 4-step CBRA in the legacy release and the RO resource information for the 4-step CBRA in the R17 as the RO configuration information in the RO resource information for the initiated 4-step CFRA; and
wherein the method further comprises:
in response to the terminal not supporting to determine the RO resource information for the initiated 4-step CFRA based on the RO resource information for the 4-step CFRA in the R17, instructing the terminal to determine the RO configuration information in the RO resource information for the initiated 4-step CFRA based on the RO configuration information in the RO resource information for the 4-step CBRA in the legacy release.

32. The method of claim 23, wherein the 4-step CFRA is initiated in at least one of following ways: being initiated by the System Information (SI) request or being initiated by the Handover command; and the method further comprises:
instructing the terminal to determine, in a specified way, a correspondence between a Synchronization Signal Block (SSB) and a RO in the RO resource information for the initiated 4-step CFRA.

33. The method of claim 32, wherein the specified way comprises at least one of:
determining the correspondence between the SSB and the RO in the RO resource information for the 4-step CBRA in the specified release as the correspondence between the SSB and the RO in the RO resource information for the initiated 4-step CFRA; or
determining the correspondence between the SSB and the RO in RO resource information for the initiated 4-step CFRA based on a correspondence between the SSB and the RO in the RO resource information for the 4-step CBRA in each release preconfigured by the network side device for the terminal.

34. A device for determining random access occasion (RO) resource information, comprising one or more processors, wherein the one or more processors are configured to:
initiate a 4-step Contention-Free Random Access (CFRA); and
in response to separate RO resource information configured in RO configuration information for a CFRA being absent for a terminal, determine the RO resource information for the initiated 4-step CFRA based on RO resource information for a 4-step Contention-Based Random Access (CBRA) in a specified release.

35. A device for indicating random access occasion (RO) resource information, comprising one or more processors, wherein the one or more processors are configured to:
initiate a 4-step Contention-Free Random Access (CFRA); and
in response to separate RO resource information configured in RO configuration information for a CFRA being absent for a terminal, indicate the terminal to determine the RO resource information for the initiated 4-step CFRAbased on RO resource information for a 4-step Contention-Based Random Access (CBRA) in a specified release.

36. A communication device, comprising:
a processor; and
a memory for storing a computer program;
wherein when the computer program is executed by a processor, the method for determining random access occasion (RO) resource information of any one of claims 1 to 19 is performed.

37. A communication device, comprising:
a processor; and
a memory for storing a computer program;
wherein when the computer program is executed by a processor, the method for indicating random access occasion (RO) resource information of any one of claims 20 to 33 is performed.

38. A computer-readable storage medium, having a computer program stored thereon, wherein when the computer program is executed by a processor, the method for determining random access occasion (RO) resource information of any one of claims 1 to 19 is performed.

39. A computer-readable storage medium, having a computer program stored thereon, wherein when the computer program is executed by a processor, the method for indicating random access occasion (RO) resource information of any one of claims 20 to 33 is performed.
